# EUROPEAN PATENT APPLICATION

(11) **EP 4 764 270 A1**
(43) Date of publication of application: **24.06.2026**
(21) Application number: 25223780.5
(22) Date of filing: 16.12.2025
(51) Int. Cl.: F16K 3/12, F16K 27/04, F16K 27/12, F16K 3/314, F16K 3/316, F16K 31/50

(54) **SHUT-OFF VALVE WITH LOAD LIMITATION FEATURES**

(30) Priority: 20.12.2024 LU 509474
(71) Applicant: Aliaxis Deutschland GmbH, 68229 Mannheim (DE)
(72) Inventor: JUNGMANN, Georg, 68229 Mannheim (DE); BEEDGEN, Jonas, 68229 Mannheim (DE); KAUFMANN, Tobias, 68229 Mannheim (DE)
(74) Representative: Sonnenberg Harrison Partners

(57) **Abstract**

A shut-off valve comprising a housing (10) having main fluid passage extending along a main flow axis (X-X) between a first port connectable to a first pipe and a second port connectable to second pipe; a shut-off element (30) movable along a shut-off axis (Y-Y) between an open position in which the shut-off element allows a fluid flow between the first port and the second port, and a shut-off position blocking the fluid flow through the shut-off element (30), wherein the shut-off element (30) comprises a shut-off body (34) extending along said shut-off axis, with at least one shutter (33) on at least one of two diametrically opposed ends of the shut-off element (30) to block the flow in the shut-off position, and a shaft or spindle (60), to move the shut-off element wherein the shut-off valve comprises at least one load limiting element.

## Description

The present application claims priority to the Luxembourg patent application LU509474, filed on 20 December 2024, the entire content thereof being incorporated therein.

### TECHNICAL FIELD

The present invention relates to a shut-off valve, in particular for water, gas and other supply networks.

### PRIOR ART

In the field of fluid supply and connection, there is a lot of effort to replace prior art alloy, metal or iron by plastics technology, and to develop full plastic networks.

For example, it is known to use full plastic connection fittings having a fitting body made of thermoplastic material (PVC, PPSU, PVDF, PPS), that can also be reinforced with fiber material.

One material which has gained a lot of interest recently in the field of water connection is polyethylene. Polyethylene is material showing no corrosion and incrustation and is therefore hygienically reliable and exhibits good durability.

A shut-off valve commercialized under the name FRIALOC made of polyethylene is known, which can be used for all plastic pipes in the water supply, which can replace for example heavy cast iron gate valves. The prior art shut-off valve has a two-flap shut-off mechanism, with two flaps pivotably mounted between an open position and a shut-off position.

One object of the present invention is to provide a shut-off valve to replace cast iron gate valves, which provides a reliable shut-off function.

### SUMMARY OF THE INVENTION

To this aim, the present disclosure proposes a shut-off valve, comprising a housing having main fluid passage extending along a main flow axis between a first port connectable to a first pipe and a second port connectable to second pipe, the housing having a first housing section with a first housing axial end and second housing section with a second housing axial end, both extending along the main flow axis and connected by a shut-off section between the first housing axial end and the second housing axial end. A shut-off element is disposed in the shut-off section, wherein the shut-off element is movable along a shut-off axis between an open position in which the shut-off element allows a fluid flow between the first port and the second port, and a shut-off position blocking the fluid flow through the shut-off element.

A shaft or spindle is provided to move the shut-off element.

The shut-off valve comprising reinforcement elements and/or load limiting elements, e.g. closing load absorption elements. A reinforcement element and/or load limiting or absorption element is provided for absorption of forces, both of the internal pressure and of a torque from opening and closing the shut-off element, or for limiting peak loads. The load limiting or absorption element helps limiting peak loads on the housing. In an aspect the shut-off element is slidable from the open position to the shut-off position. This allows having a reliable shut-off valve and less subject to deformation.

In an aspect cooperating guiding elements are provided on the shut-off body and in the shut-off section of the housing, adapted to guide movement of the shut-off element, wherein the guiding elements comprise ribs engaged with grooves.

One of the ribs and grooves can have a decreasing width downwardly in the shut-off direction. The guiding elements can provide axial contact surfaces between the shut-off element and the housing in the shut-off position of the shut-off element. Ribs and grooves are therefore load limiting elements.

A varying width allows sliding down the shut-off element from the open position with lower force and more force is needed only before reaching the shut-off position, where it is necessary to push down the shutting element to the final shut-off position.

In an aspect the shaft or spindle being screwed into the shut-off element. The shaft or spindle of the shut-off valve can be hollow.

The shaft or spindle may comprise an overturn prevention element, such as a shortened thread, and/or internal stop stopping the rotation of the spindle, and /or an overturn absorption element.

Reinforcement element can be provided at the shut-off section. The reinforcement element can saddle the housing around the shut-off section. The reinforcing or reinforcement element is provided for absorption of forces, both of the internal pressure and of a torque from opening and closing the shut-off element.

The shut-off element can comprise a shut-off body extending along said shut-off axis, with at least one shutter on at least one of two diametrically opposed ends of the shut-off element to block the flow in the shut-off position, said shutter having a contour resting with the first housing axial end or the second housing axial end in the shut-off position, the contour having a sealing lip integral with the contour.

The housing can be made of a first material and the shut-off element can be made of a second material, wherein the second material can be non-metallic and harder than the first material.

In particular, the combination of materials for the housing and for the shut-off element is as follows: One of the housing and the shut-off element needs to be made from a harder material, while the other one of the housing and the shut-off element is made from a softer material. The softer material can either be on the main housing side or in the sealing lip area of the shut-off element. A hard material avoids deformation during operation. The soft material adapts to the sealing contour but is resistant enough to build up the required surface pressure to ensure the sealing effect.

It is noted that in case of water applications the housing must be made from a material approved for drinking water. A suitable material is for example polyethylene, but other materials with a Young's modulus of 900 to 1 300 MPa can be usable, too.

In an aspect, said shut-off element is made of a single material/part and the sealing lip is made integral with the shut-off element.

In an aspect, the shut-off element is made of plastic, preferably made from a plastic material with a Young's modulus of 8 000 to 24 000 MPa.

The sealing lip can be made of a third material, with the second material being harder than the first material and with the first material being harder than the third material.

Hard materials for the shut-off element can for example be PPS, PPSU, PBT and POM (with and without glass fiber / carbon fiber content). Other options can be polyamide (with and without glass fiber / carbon fiber content), e.g. PA 6, PA 6.6, PA 6I/X, PA6T/6I, PA10, PA11, PA12. However, other materials with a Young's modulus of 8 000 to 23 000 MPa are suitable, too.

In an aspect, the shut-off body is injection molded, preferably made from plastic material with a Young's modulus of 8 000 to 24 000 MPa, and the sealing lip is an elastomer, preferably with a hardness of 65 to 85 Shore A, and joined with the shut-off body through vulcanization.

The shut-off body and the sealing lip can be 2K injection molded, with the shut-off body preferably made from a plastic material with a Young's modulus of 8 000 to 24 000 MPa and the sealing lip preferably made from a TPE material with a hardness of 65 to 85 Shore A.

As an alternative, the shut-off body can be designed as 3K component, wherein the shut-off body is overmolded by another material. This can be necessary to provide an intermediate layer to ensure a good bonding to the sealing lip made from TPE.

According to the present disclosure, a bi- or tri-injection process is proposed which allows creating a chemical bond between the shut off element and the sealing lip. The physicochemical bond between the shutters and the sealing lip creates water tightness. In addition, the material differences between the sealing lip and the valve housing against which the sealing lip is pressed also creates water tightness.

In an aspect the sealing lip has an axial lip part for an axial contact with the corresponding open end, in particular to seal against an axial housing end wall, and a radial lip part for a radial contact with the shut-off section, in particular a bottom wall, and a transition lip part between the axial lip part and the radial lip part.

In an aspect the contour has a front axial face with a bottom face, an upper face joined by two lateral faces, wherein the contour does not lie in a single axial plane, wherein the upper face and the bottom face projects axially away from the lateral faces.

In an aspect the bottom face is not aligned at the same axial position as the upper face, but instead projects axially less towards the outside than the upper face.

The axial lip part can extend axially away from the upper face and lateral faces, and the radial lip part can extend radially from the bottom face.

In an aspect the transition lip part forms a transition curve axially inwardly of the radial lip part, in particular the transition lip part projects axially inwardly from both the axial lip part and the radial lip part, wherein the transition lip part is at varying distance from the bottom face outer wall and goes further away from the bottom face outer wall than the radial lip projection.

The transition lip part can start at the transition between the lateral faces and the bottom face, which is at a radial position at where the guiding elements ends.

In an aspect the shut-off element axis is orthogonal to the main flow axis, in particular wherein the shut-off body is cylindrical and extends along the shut-off axis.

In an aspect the shut-off element axis comprises a shutter on both ends.

In an aspect the housing is injection molded, preferably made from plastics material with a Young's modulus of 900 to 1 300 MPa.

In an aspect, the spindle is injection molded, preferably made from plastics material with a Young's modulus of 8 000 to 24 000 MPa.

The housing can be multilayered.

The present shut-off valve achieves the sealing effect by using a special geometry and the appropriate combination of materials.

In addition, the combination of materials for the shut-off element and the spindle is preferably a hard /hard combination, for transmission of high forces with low friction. This helps achieving a better efficiency. The same material could be used for spindle and shut-off element, but using different plastics for the shut-off element and the spindle allows for better tribology effects.

An appropriate material for the spindle is for example polyamide (with and without glass fiber / carbon fiber content), e.g. PA 6, PA 6.6, PA 6I/X, PA6T/6I, PA10, PA11, PA12. Other options can be PPS, PPSU, PBT and POM (with and without glass fiber / carbon fiber content). However, other materials with a Young's modulus of 8 000 to 23 000 MPa are suitable, too.

With this design a shut-off valve is provided without metal in contact with water, and without elastomer sealing or, depending on the design, at least with only a very small overall amount of elastomer. In turn, there is no problem of corrosion, and no problem of biofilm growth on the elastomer.

Another advantage of this concept is the lightweight and lower CO2 footprint in comparison to metal shut-off valves.

### DESCRIPTION OF THE DRAWINGS

Other characteristics and advantages of the invention will be more clearly evident upon reading the description of several currently preferred embodiments, provided as examples only, with reference to the attached drawings 1 to 13, wherein:
Figure 1 shows a shut-off valve according to a first aspect of the present disclosure,
Figure 2 shows a cut view of the shut-off valve of figure 1 according to an aspect of the present disclosure,
Figure 3 shows a cut view of a housing of the shut-off valve of figure 1 according to an aspect of the present disclosure,
figure 4 shows a side view of a housing of the shut-off valve of figure 1 according to another aspect of the present disclosure,
Figure 5 shows another cut view of a housing of the shut-off valve of figure 1 according to an aspect of the present disclosure,
Figure 6A and figure 6B show a side view of a shut-off element according to another aspect of the present disclosure,
Figure 7 shows another side view of the shut-off element of figure 6A and 6B according to the present disclosure,
Figure 8 is a top view of the shut-off element according to an aspect of the present disclosure,

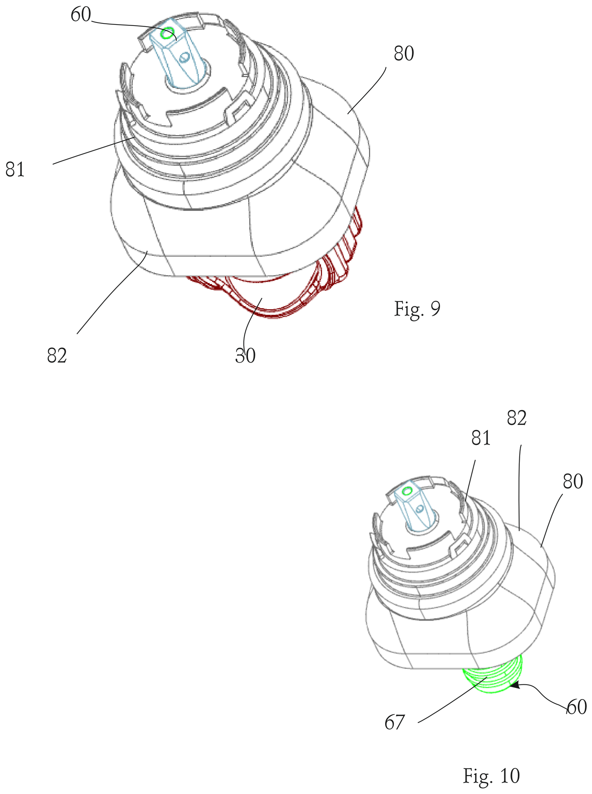

Figure 9 is a top view of a cover with a shut-off element according to an aspect of the present disclosure,
Figure 10 is another top view of a cover of a shaft or spindle according to another aspect of the present disclosure,
Figure 11 is a view of a spindle usable in the shut-off valve,
Figure 12 is a shut-off valve according to another aspect,
Figure 13 is detail of the shut-off valve of figure 12,
Figure 14 to 16 show details of a shut-off valve according to another aspect.

### DETAILED DESCRIPTION

In the figures, identical parts are identified using the same reference numbers.

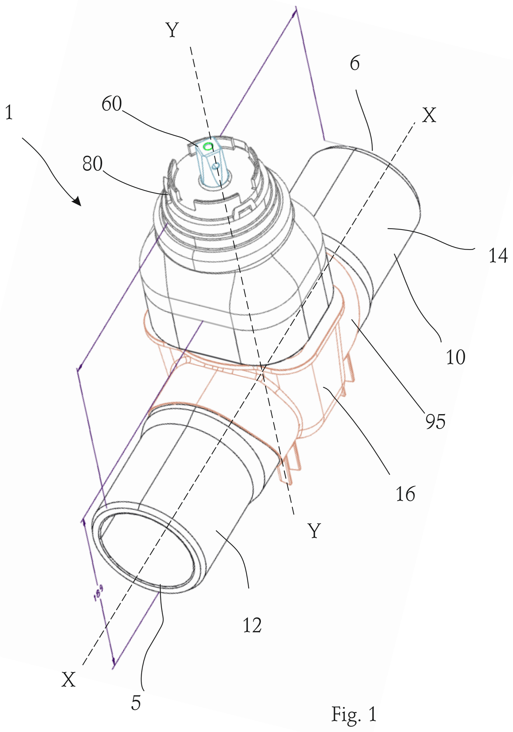

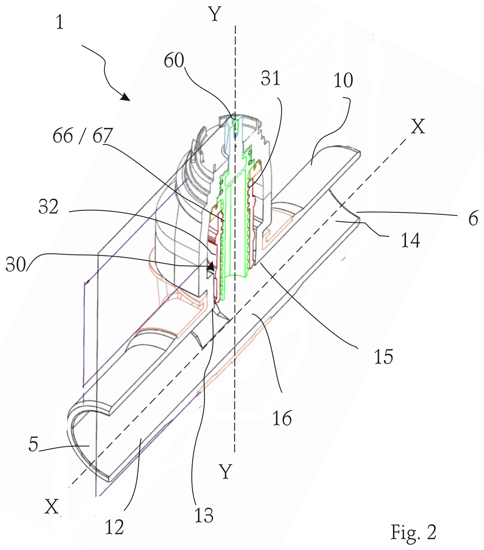

Figure 1 shows a shut-off valve 1 according to a first aspect of the present disclosure, and figure 2 is a cut view of the shut-off valve 1.

The shut-off valve 1 comprises a shut-off element 30 (not visible on figure 1) received in a housing 10 and can be actuated by a shaft or spindle 60.

The housing 10 provides a main fluid passage extending along a main flow axis X-X between a first port 5 connectable to a first pipe and a second port 6 connectable to second pipe.

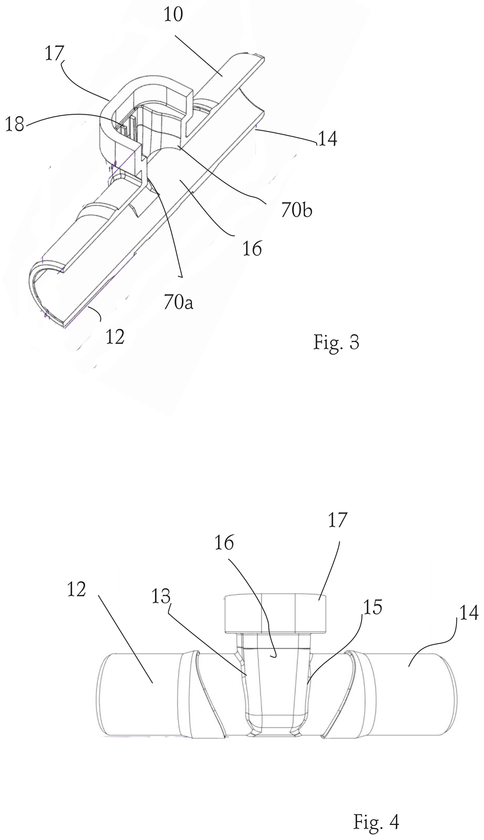

Figures 3 to 5 are different views of the housing 10.

The housing 10 has a first housing section 12 with a first axial housing end 13 and second housing section 14 with a second axial housing end 15, both extending along the main flow axis. A shut-off section 16 connects the first housing section 12 and the second housing section 14, as best seen on figure 3.

The shut-off element 30 is disposed in the shut-off section 16.

The shut-off element 30 is movable along a shut-off axis Y-Y between an open position in which the shut-off element 30 allows a fluid flow between the first port 5 and the second port 6, and a shut-off position blocking the fluid flow through the shut-off element.

The shut-off element axis Y-Y is orthogonal to the main flow axis X-X, however, other angles are possible, too.

In the open position, as shown in the cut-view of figure 2, an entire cross section of the fluid passage is preferably not obstructed by the shut-off element 30, however this is not limiting the invention and it is possible that the shut-off element partly obstructs the main fluid passage.

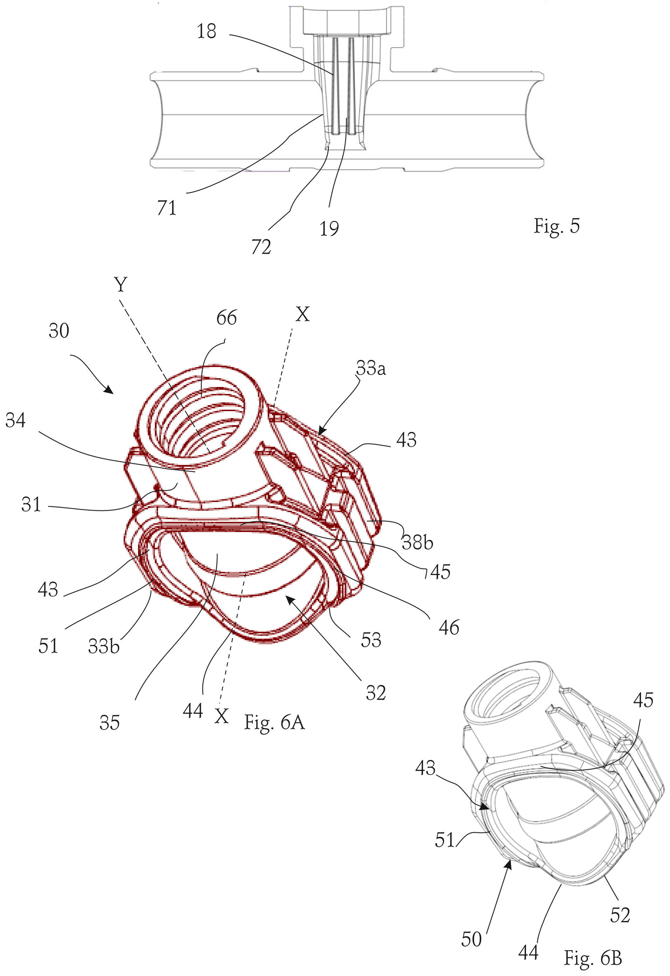

The shut-off element 30 is best seen on figures 6 to 8. The shut-off element 30 comprises a shut-off body 34 extending along said shut-off axis Y-Y, with an upper actuation part 31 and a lower obstructing part 32 to come in contact with the housing bottom of the shut-off section of the housing.

The upper actuation part 31 is provided to receive a shaft or spindle 60, to operate the shut-off element between the open position and the shut-off position.

The shaft or spindle 60 is screwable into the shut-off element 30. Therefore, in the example shown, the upper actuation part 31 is in the form of an open body dimensioned to receive the spindle 60. The open body is cylindrical in this aspect, but this is not limiting the invention.

Internal threads 66 are provided on the inside of the shut-off element 30 to cooperate with external threads 67 of the spindle 60.

The shaft or spindle of the shut-off valve is hollow, but could be made from solid material, too.

A hollow shaft or spindle is suitable for injection molding of plastic materials and allows minimizing the use of material.

Suitable material for the spindle is for example polyamide (with and without glass fiber / carbon fiber content), e.g. PA 6, PA 6.6, PA 6I/X, PA6T/6I, PA10, PA11, PA12. Other options can be PPS, PPSU, PBT and POM (with and without glass fiber / carbon fiber content). However, other materials with a Young's modulus of 8 000 to 23 000 MPa are suitable, too.

In an aspect, the shaft or spindle could e.g. use trapezoidal threads or buttress threads.

Preferably the threads 67 have a flank angle of between 3° and 15° (2x15°=30°), for example 7.5°. The flanks of the thread could be symmetrical or unsymmetrical.

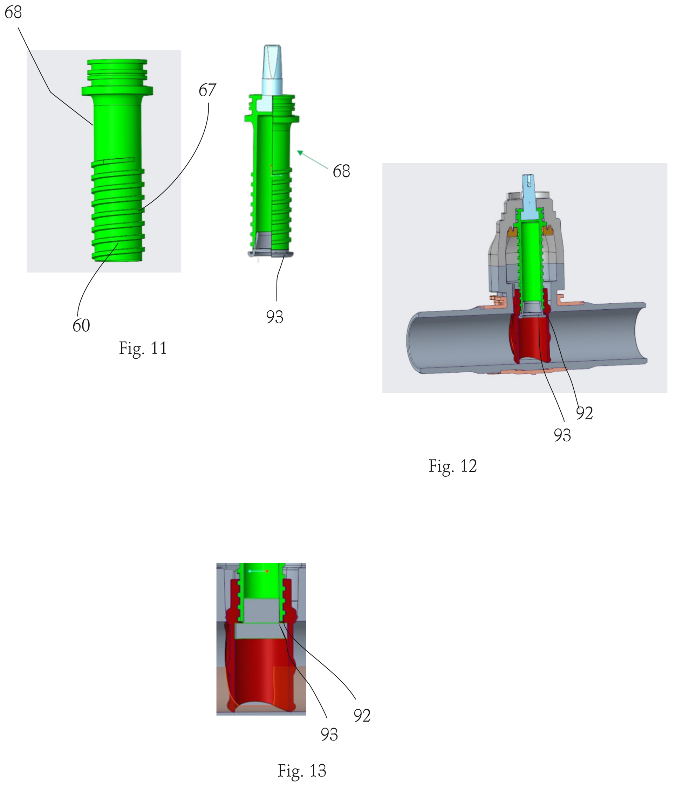

It should be noted that the shaft or spindle 60 can be designed with an overturn prevention element 68. This is illustrated on figure 11. In one aspect, the overturn prevention element 68 is a shortened thread as shown on figure 11, i.e. a thread 67 not extending along the entire length of the shaft or spindle 60. This acts as a free wheel. In particular, freewheeling in valve open position is avoiding high loads on open stop.

In another aspect shown on figures 12 and 13, a lower stop 92 between the shut-off element and the spindle can be provided to act as internal stop, stopping the rotation of the spindle. The internal lower stop 92 is projecting radially inwardly from the shut-off element. The internal lower stop 92 is adapted to abut against a corresponding lower stop element 93, which is connected with the spindle. The corresponding lower stop element 93 of the spindle is projecting radially outwardly from the spindle.

Peak loads on the housing are limited. The internal lower stop 92 and the corresponding lower stop element 93 of the spindle limit the load in the closed position of the shut-off element. Limiting load in valve closed position helps avoiding high loads in the shut-off section 16, in particular on the cap element 80, but also on the valve body. The inner lower stop element 93 can be made of the same material as the spindle 60.

The lower obstructing part 32 of the shut-off body is provided with first and second diametrically opposed shutters 33a, 33b sealingly obstructing the fluid flow in the shut-off position (figure 6). The opposed shutters 33a, 33b are collectively referred to the shutter 33 in the rest of the disclosure.

In the shut-off position of the shut-off element 30, the first shutter 33a obstructs the main fluid passage at the first axial housing end 13, and the second shutter 33b obstructs the main fluid passage at the second axial housing end 15.

The shut-off element 30 is slidable from the open position to the shut-off position, and vice-versa.

The housing 10 and the shut-off element 30 are provided with cooperating sliders and guiding elements. In the present embodiment, the shut-off element 30 has a plurality of outer rails or grooves 38a, 38b along the shut-off body, extending radially away from the shut-off body, and adapted to receive a corresponding plurality of ribs 18 in the shut-off section of the housing.

In the example shown on the figures, in particular figures 2 to 5, the shut-off section of the housing has two axial walls facing each other and each provided with two ribs. This is an example only and the number of ribs can be adjusted depending on the expected load under operation. In addition, the shut-off element 30 can have a plurality of ribs to interact with a plurality of grooves of the housing.

The rails and ribs are provided to guide movement of the shut-off element during closing of the shut-off element. The rails and the ribs also provide contact surface for absorbing, at least partially, the radial forces on the shutter. In addition, the rails and ribs also provide contact surfaces between the shut-off element and the housing, for transferring the load and pull-out force acting on the shutter element 30 to the housing 10, when the shut-off element 30 is in the shut-off position.

In the example, the rails 38a, 38b of the shut-off element have a width, which remains constant in the shut-off direction, whilst the width of the ribs of the housing varies in the shut-off direction.

As can be seen on figure 5, the width of the ribs 18 gets wider towards the housing bottom, hence the width of the grooves therebetween 19 getting smaller towards the housing bottom.

This is an example only and the housing can be provided with constant width of the groove/ribs whilst the shut-off element has varying corresponding rails/ribs.

A varying width allows sliding down the shut-off element from the open position with lower force and more force is needed only before reaching the shut-off position, where it is necessary to push down the shutting element 30 to the final shut-off position.

The distance over which the width of the rails is equal to the width of the ribs defines the contact surface between the rails and the ribs.

Each shutter 33 has a contour 43 interacting with a housing wall 70a, 70b at the respective axial housing ends 13, 15.

Each contour 43 has a bottom face 44, an upper face 45 joined by two lateral faces 46 towards the outside. The lateral faces 46 extend roughly between the upper actuating part 31 and down to the rails 38 end.

As can be seen on the figures, the contour 43 does not lie in a single axial plane. Instead, the contour 43 is shaped to reduce the load on the shut-off element 30 under operative conditions and to ensure a good sealing all around the contour.

Both, the upper face 45 and the bottom face 44 are curved axially, in direction of the flow axis, towards the outside. With other words, the upper face 45 and the bottom face 44 projects axially away from the lateral faces.

In addition, the bottom face 44 is not aligned at the same axial position as the upper face 45, but instead projects axially less towards the outside than the upper face. With other words, a line joining the upper face and the bottom face is slanted with respect to a transverse middle plane extending orthogonal to the main flow axis X-X and comprising the shut-off element axis Y-Y. Having a lower face projecting radially less than the upper face provides for more space for the spindle and the lip on the upper face, whilst allowing vertical displacement of the shutter.

This design allows reducing the load on the shutter elements, in particular to help counteracting the lever force acting at the bottom of the shut-off element under operation, which tends to lift up the bottom whilst the upper part has less movement freedom to the shut-off body being anchored with the shaft or spindle. The shut-off element is therefore subjected to load, which tends to lift up the bottom face. The curved shape towards the outside, e.g. facing the fluid, aims at reducing this lever effect.

Each contour 43 has a sealing lip 50 with an axial lip part 51 provided to seal against an axial housing end wall 71, a radial lip part 52 provided to seal against a bottom wall 72, and a transition lip part 53 between the axial lip part 51 and the radial lip part 52.

The axial lip part 51 extends axially away from the upper face 45 and lateral faces 46. The radial lip part 52 extends radially from the bottom face 44.

The transition part 53 extends between the axial lip part 51 and the radial lip part 52, and therefore makes the transition between an axial projection and a radial projection, with the axial projection slowly turning from an axial projection to become a radial projection.

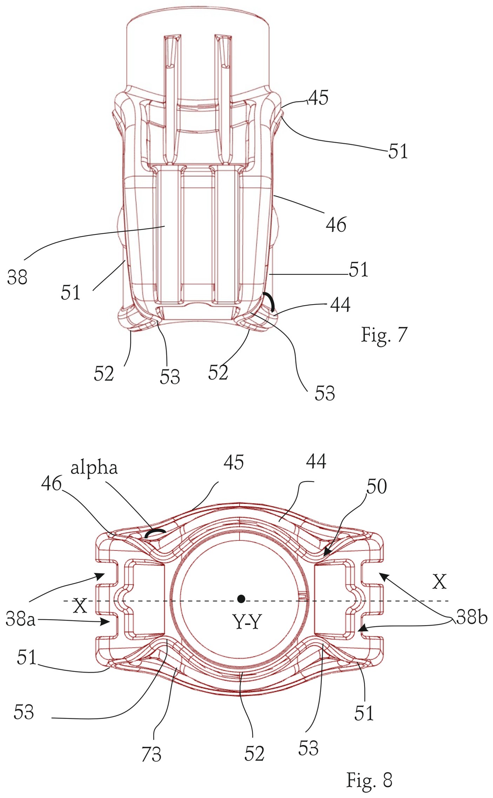

It should be noted that the transition part 53 makes a transition curve axially inwardly of the radial lip part 52, as can be seen on figures 7 and 8. The transition lip part 53 extends axially inwardly away from the axial lip part 51 and from the radial lip part 52. Hence, the transition lip part 53 projects axially inwardly from both the axial lip part 51 and the radial lip part 52. With other words, the transition lip part 53 is at varying distance from a bottom face outer wall 73 and goes further away from the bottom face outer wall than the radial lip projection.

This transition part 53 having a curve shape allows a smooth transition between the radial and the axial lip part. In turn, this allows the sealing lip 50 using available space for sealing.

The transition lip part 53 starts at the transition between the lateral faces 46 and the bottom face 44, i.e. roughly at a position at where the rails end 38. This position also follows the angle alpha where the bottom face 44 starts incurving and projecting away from the lateral faces 46. Therefore, when the shut-off element is in the shut-off position, the transition lip part 53 is provided to seal the contact with the housing where the ribs 18 on the housing ends to join the shut-off section in a pipe shape.

To ensure a good sealing behavior, one of the housing and the shut-off element needs to be made from a harder material, while the other one of the housing and the shut-off element is made from a softer material. The softer material can either be on the main housing side or in the sealing lip area of the shut-off element.

The shut-off element 30 can be made of a single part and the sealing lip can be made integral with the shut-off element. Preferably, the shut-off element 30 is made by injection molding.

The sealing effect is obtained by the interaction between the shut-off element, in particular the sealing lip and the valve housing. The sealing is based on the findings, that the housing is made of a first material and the shut-off element is made of a second material, wherein the second material is non-metallic and harder than the first material.

Suitable materials for the shut-off element can for example be PPS, PPSU, PBT and POM (with and without glass fiber / carbon fiber content). Other options can be polyamide (with and without glass fiber / carbon fiber content), e.g. PA 6, PA 6.6, PA 6I/X, PA6T/6I, PA10, PA11, PA12. However, other materials with a Young's modulus of 8 000 to 23 000 MPa are suitable, too. The housing is typically injection molded, preferably made from plastics material with a Young's modulus of 900 to 1 300 MPa, like for example polyethylene.

As a first alternative, the shut-off body 34 is injection molded, preferably made from plastic material with a Young's modulus of 8 000 to 24 000 MPa and the shut-off element sealing lip 50 is preferably made from an elastomer with a hardness of 65 to 85 Shore A and is joined with the shut-off element body 34 through vulcanization.

As a second alternative, the shut-off body 34 and the shut-off element sealing lip 50 is 2K injection molded, with the shut-off body 34 preferably made from a plastic material with a Young's modulus of 8 000 to 24 000 MPa and the shut-off element sealing lip 50 preferably made from a TPE material with a hardness of 65 to 85 Shore A.

As a third alternative, the shut-off body 34 can be designed as 3K component, wherein the shut-off body 34 is overmolded by another material. This can be necessary to provide an intermediate layer to ensure a good bonding to the sealing lip made from TPE.

The specific geometry, design and dimensioning of the sealing lip already can drastically improve the sealing capacities, but these can be further improved, if at this location an engagement between soft and hard material is provided by starting with a line contact of the sealing lip.

By combining the soft material and the hard material in a bi-injection process, a shut off element can be obtained that satisfies both high stiffness and high mechanical strength for the body and the sealing effect at the same time. These preferred properties are achieved by at least two materials.

A cap element 80 is provided on top of the shut-off section 16, to cover the shut-off element 30. The cap element 80 is provided with an upper area 81 having an opening for the spindle 60 and a lower area 82. The lower area 82 is joined to the upper end 17 of the shut-off section 16 of the housing 10.

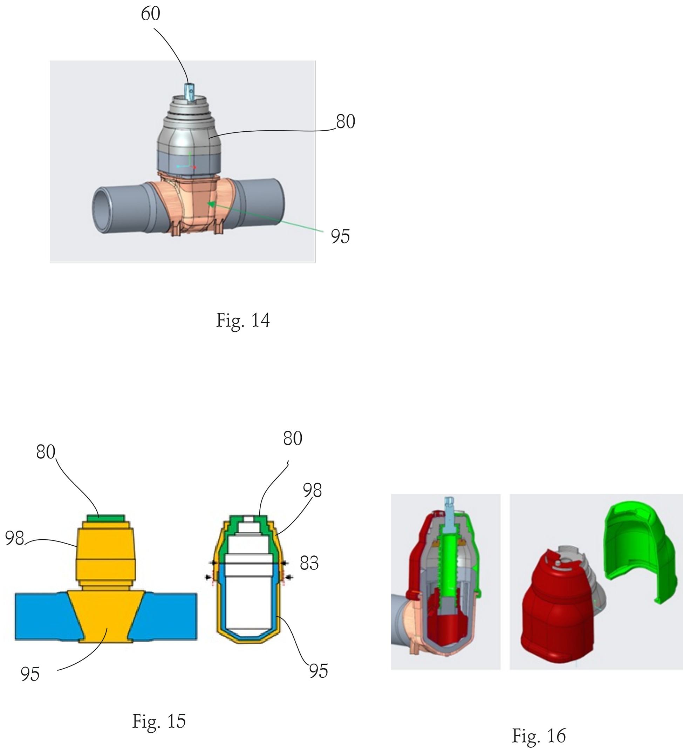

In the embodiment illustrated in figure 14, a reinforcement element 95 is provided at the shut-off section, to help stabilizing the shut-off valve. The reinforcement element 95 saddles the housing around the shut-off section. The reinforcement element is provided for absorption of forces, both of the internal pressure and of the torque from opening and closing the shut-off element.

The reinforcement element 95 can be made of a material that has better mechanical properties than the material of the shut-off body. The reinforcement element 95 improves the resistance to inside pressure and load from the valve closing torque.

It should be noted that the cap element 80 may be reinforced as well, in particular to help absorbing the force, if the spindle has been overturned. Reinforcement on the housing and cap can be connected by jointing.

This is shown on figures 15 and 16. The cap element 80 is provided with a cap reinforcement 98, and the housing with a housing reinforcement element 95. The cap reinforcement can be joined in a reinforcement joining section 83.

The cap reinforcement 98 helps the cap element 80 withstanding the inside pressure and load from valve closing torque.

The cap element can be made of polyethylene, and the cap reinforcement 98 is made of a material having better mechanical properties. Suitable materials for the cap reinforcement can for example be PPS, PPSU, PBT and POM (with and without glass fiber / carbon fiber content). Other options can be polyamide (with and without glass fiber / carbon fiber content), e.g. PA 6, PA 6.6, PA 6I/X, PA6T/6I, PA10, PA11, PA12. However, other materials with a Young's modulus of 8 000 to 23 000 MPa are suitable, too.

It is possible to provide the cap reinforcement 98 in the form of two half shells.

It is also possible to have a cap reinforcement in a one piece, that can be connected to housing reinforcement element 95 at the reinforcement joining section 83. Cap reinforcement and housing reinforcement can be joined preferably by welding, but other joining technologies are possible, too.

The foregoing description of the preferred embodiments of the disclosure has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention is defined by the claims appended hereto and their equivalents.

## Claims

1. Shut-off valve, comprising
a housing (10) having main fluid passage extending along a main flow axis (X-X) between a first port connectable to a first pipe and a second port connectable to second pipe, the housing having a first housing section (12) with a first housing axial end (13) and second housing section (14) with a second housing axial end (15), both extending along the main flow axis (X-X) and connected by a shut-off section (16) between the first housing axial end (13) and the second housing axial end (15),
a shut-off element (30) disposed in the shut-off section, wherein the shut-off element (30) is movable along a shut-off axis (Y-Y) between an open position in which the shut-off element allows a fluid flow between the first port and the second port, and a shut-off position blocking the fluid flow through the shut-off element (30),
wherein the shut-off element (30) comprises a shut-off body (34) extending along said shut-off axis, with at least one shutter (33) on at least one of two diametrically opposed ends of the shut-off element (30) to block the flow in the shut-off position,
a shaft or spindle (60), to move the shut-off element,
the shut-off valve comprising at least one load limiting element (18, 38, 92, 93).

2. Shut-off valve according to claim 1, further comprising at least one reinforcement element (83, 95, 98).

3. Shut-off valve according to claim 2, wherein the at least one reinforcement element (83, 95, 98) comprises a housing reinforcement element (95) at the shut-off section.

4. Shut-off valve according to claim 3, wherein the housing reinforcement element (95) saddles the housing around the shut-off section.

5. Shut-off valve according to any one of claims 1 to 4, comprising a cap (80) provided to cover the shut-off element (30), preferably on top of the shut-off section (16), with a cap upper area (81) having an opening for the spindle (60) and a cap lower area (82) joined to the shut-off section (16).

6. Shut-off valve according to any one of claims 1 to 5, wherein the load limiting element comprises ribs engaged with grooves, in particular providing axial contact surfaces between the shut-off element (30) and the housing (10) in the shut-off position of the shut-off element.

7. Shut-off valve according to claim 6, wherein the ribs and the grooves are cooperating guiding elements (18, 38) on the shut-off body (34) and in the shut-off section (16) of the housing (10), adapted to guide movement of the shut-off element.

8. Shut-off valve according to claim 6 or 7, wherein one of the ribs and grooves have a deceasing width downwardly in the shut-off direction.

9. Shut-off valve according to any one of the preceding claims, wherein the shut-off element axis (Y-Y) is orthogonal to the main flow axis (X-X), in particular wherein the shut-off body is cylindrical and extends along the shut-off axis.

10. Shut-off valve according to any one of the preceding claims, wherein the shut-off element comprises a shutter (33) on both ends.

11. Shut-off valve according to any one of the preceding claims, wherein the shaft or spindle being screwed into the shut-off element and has an overturn prevention element (68).

12. Shut-off valve according to the preceding claim, wherein the overturn prevention element (68) is a freewheel element as a load limiting element, such as a shortened thread extending along part of the length of the shaft or spindle.

13. Shut-off valve according to any one of the preceding claims, wherein the shaft or spindle of the shut-off valve has a lower stop element (93) provided for stopping the rotation of the spindle abutting against an internal stop (92) between the lower stop element (93) and the shut-off element (30), wherein the lower step element (93) and the internal stop (92) being load limiting elements.

14. Shut-off valve according to any one of the preceding, wherein the shaft or spindle of the shut-off valve has a thread (67) with a flank angle of between 0° and 30°, preferably 15°.

15. Shut-off valve according to claim 4 or any of claims 6 to 14 when dependent from claim 5, wherein the cap (80) is provided with a cap reinforcement (98), and the housing with the housing reinforcement element (95) is joined to the cap reinforcement (98) in a reinforcement joining section (83).

16. System comprising a shut-off valve assembly according to any one of claims 1 to 15.
